# EUROPÄISCHE PATENTSCHRIFT

(11) **EP 1 061 841 B1**
(45) Veröffentlichungstag und Bekanntmachung des Hinweises auf die Patenterteilung: **07.05.2003**
(21) Anmeldenummer: 99909416.2
(22) Anmeldetag: 10.03.1999
(51) Int. Cl.: A47J 31/08

(54) **FILTERTÜTE FÜR AUFGUSSGETRÄNKE, INSBESONDERE EINE KAFFEEFILTERTÜTE**
FILTER BAG FOR BEVERAGES OBTAINED BY INFUSION, ESPECIALLY COFFEE FILTER
SACHET FILTRE POUR BOISSONS OBTENUES PAR INFUSION, NOTAMMENT SACHET FILTRE A CAFE

(30) Priorität: 13.03.1998 NL 1008580
(43) Veröffentlichungstag der Anmeldung: 27.12.2000
(73) Patentinhaber: Pijsel, Roelof, 6132 BG Sittard (NL)
(72) Erfinder: Pijsel, Roelof, 6132 BG Sittard (NL)
(74) Vertreter: Van Weele, Paul Johannes Frits
(86) Internationale Anmeldenummer: NL9900129
(87) Internationale Veröffentlichungsnummer: WO99045829

(56) Entgegenhaltungen:
- WO-A-96/32043
- DE-A- 19 502 025
- DE-U- 9 108 790
- DE-U- 29 802 745

## Beschreibung

Die Erfindung betrifft eine Filtertüze der eingangs in Anspruch 1 erwähnten Gattung. Solche Filtertüten sind z.B. bekannt aus der internationalen Anmeldung WO 96/-32043.

Kaffeefiltertüten werden, hauptsächlich im Haushalt aber auch anderweitig, in großen Mengen verwendet zum Kaffeebrühen indem man eine mit gemahlenem Kaffee gefüllte Filtertüte in einen Filtereinsatz legt und heißes Wasser auf das Kaffeemehl tröpfelt oder gießt. Dies kann von Hand oder automatisch geschehen. Die Filtereinsätze die in der Praxis benutzt werden gibt es in verschiedenen Standardgrößen, abhängig von wieviel Tassen Kaffee mit einem Filtertüteninhalt gebrüht werden sollen.

In bestimmten Supermärkten werden beträchtlich mehr Filtertüten Nr. 4, geeignet für vier Tasser Kaffee, verkauft als Filtertüten Nr. 2, geeignet für zwei Tassen Kaffee. Dies hat dazu geführt, daß die Filtertüten Nr. 2 in bestimmten Supermärkten nicht mehr verkauft. werden. Der Konsument ist dann auf Filtertüten Nr. 4 angewiesen, die in die Filtereinsätze der ersten Standardgröße passen. Diese passen jedoch nicht in den Filtereinsatz der kleineren zweiten Standardgröße. Bei Anwendung einer Kaffeemaschine kann das bedeuten, daß die Filtertüte zu weit über den Filtereinsatz hinausragt, wodurch die gute Wirkung der Kaffeemaschine nicht garantiert werden kann. In der obenerwähnten internationalen Patentanmeldung WO 96/32043 wird deshalb vorgeschlagen an der offenen Oberseite der Filtertüte einen perforierten Rand anzubringen mit dessen Hilfe von der Oberseite der Filtertüte ein Streifen abgetrennt werden kann um somit die Höhe der Filtertüte zu vermindern.

An der Lösung, die aus WO 96/32043 bekannt ist, kleben etliche Nachteile. Die besondere Faserstruktur des Filterpapiers macht das Abtrennen am perforierten Rand problematisch weil die Filtertüte dermaßen beschädigt werden kann, daß sie nicht mehr zu verwenden ist. Bei Anwendung der Filtertüten in einem Filtereinsatz der größeren ersten Standardgröße ist es natürlich nicht nötig einen Teil der Filtertüte am perforierten Rand abzutrennen. Es zeigt sich jedoch, daß der perforierte Rand das Wegwerfen der Filtertüte mit seinem wasserdurchtränkten Kaffee nach Beendigung des Kaffebrühens erschwert. Das Fasermaterial der Filtertüte ist nämlich durch das warme Wasser erheblich strapaziert worden. Beim Herausnehmen der mit nassem Kaffee gefüllten Filtertüte mit der Hand, kann dadurch der Oberrand der Filtertüte leicht bei den perforierten Rändern einreißen.

Ein wichtiger Nachteil ist ferner, daß das Abtrennen des oberen Teils der Filtertüte allerdings die Höhe der Filtertüte auf die richtige Größe vermindern kann, der Filtertüte jedoch nicht die richtige Form verleiht. Die Filtereinsätze Nr. 4 und 2 unterscheiden sich nämlich nicht nur in bezug auf die Höhe, sondern auch die Breite der Filtertüte an der Unterseite und die Winkel die die Seiten der Filtertüte machen, sind anders. Das Ergebnis ist, daß eine Filtertüte Nr. 4 auch nach Abtrennen des Oberrands noch immer nicht gut in einen Filtereinsatz Nr. 2 paßt. Dadurch, daß die Unterseite nicht cut anliegt kann es sogar geschehen, daß die Unterseite durch das Schwellen des Kaffeemehls reißt, so daß die Filterwirkung des Filters mindestens teilweise verloren geht.

Aus DE 195 02 025 Al ist eine Filtertüte der Größe Nr. 2 bekannt mit einer seitlichen Doppelfalte um die Filtertüte an einem Filtereinsatz Nr.4 anzupassen. Weil die Größe Nr.4 viel häufiger verwendet wird als Nr.2 muß die Anpassung meistenteils durchgefuhrt werden, wobei eine nachteilige Verformung der Filtertute auftritt.

Der Erfindung liegt die Aufgabe zugrunde eine Filtertüte der erwähnten Gattung zu verschaffen, wobei kein Rand einer Perforierung entlang abgetrennt werden muß, und wobei es möglich ist, die Form der Filtertüte an die Form eines Filtereinsatzes der kleineren zweiten Standardgröße anzupassen und die gekennzeichnet ist durch die Merkmale von Anspruch 1.

Die Erfindung beruht auf der Idee die Größe der Filtertüte nicht zu vermindern durch Entfernung von Teilen der Filtertüte, sondern durch Teile der Filtertüte umzufalten gemäß entsprechenden vorgesehenen Falzlinien, die ein richtiges Falten und Anpassen der Abmessungen der Filtertüte garantieren. In solcher Weise kann eine Filtertüte, die für einen Filtereinsatz der ersten Standardgröße geeignet ist, an einen Filtereinsatz angepaßt werden, so daß der Filter auch in angepaßter Form seine Wirkung vollständig behält und dessen Qualität ebenso gut ist wie die einer Filtertüte die speziell für einen Filtereinsatz der kleineren zweiten Standardgröße hergestellt worden ist.

Ein Ausführungsbeispiel der Erfindung ist gekennzeichnet durch das Merkmal von Anspruch 2. Dieses Ausführungsbeispiel unterscheidet sich durch die mittels eines Farbstoffes deutlich sichtbar vorgesehenen Falzlinien, ohne daß die Anwendung eines Farbstoffes schädliche Auswirkungen für den Konsumenten hat.

Ein Ausführungsbeispiel das in diesem Zusammenhang Vorteile aufweist wird gekennzeichnet durch Anspruch 3. Dadurch, daß die Falzlinien unterbrochen sind wird ein Minimum an Farbstoff verwendet, was die Unschädlichkeit des Anbringens von Falzlinien weiter fördert.

Ein Vorzugsausführungsbeispiel der Erfindung wird gekennzeichnet durch Anspruch 4. Diese Ausführung der Erfindung ist bevorzugt erstens, weil das Filterpapier nicht bedruckt werden muß und zweitens, weil die Relieflinien das Falten der dafür in Betracht kommender. Teile der Filtertüte vereinfachen. Das Anbringen von Relieflinien auf der Filtertüte ist produktionstechnisch eine sehr einfache Handlung, die gut in bestehende Produktionsprozesse integriert werden kann.

Vorzugsweise wird das Merkmal von Anspruch 5 angewendet. Diese Maßnahme ist wichtig um die Form der Filtertüte, nachdem diese durch Falten von Teilen der Filtertüte, so gut wie möglich an Filtereinsätze der kleineren Standardgröße anzupassen.

Mit dem Hinblick auf ein einfaches und richtiges Falten, ist das Ausführungsbeispiel gekennzeichnet in Anspruch 6 von Interesse. Sein Belang wird bei der Beschreibung der Ausführungsbeispiele unter Bezugnahme auf die Zeichnung näher erläutert.

Die Erfindung wird nun auf nicht-einschränkende Weise und ausschließlich als Beispiel, unter Bezugnahme auf zwei Ausführungsbeispiele die in der Zeichnung illustriert werden, erläutert, wobei:
Figur 1 eine Ansicht einer erfindungsgemäßen Filtertüte Nr. 4 ist, in platter Form, ungefähr halb so groß wie in Wirklichkeit,
Figur 2 eine Ansicht einer Filtertüte Nr. 2 gemäß dem Stand der Technik ist, und
Figur 3 eine Ansicht einer Vorzugsausführung wie in Figur 1 ist.

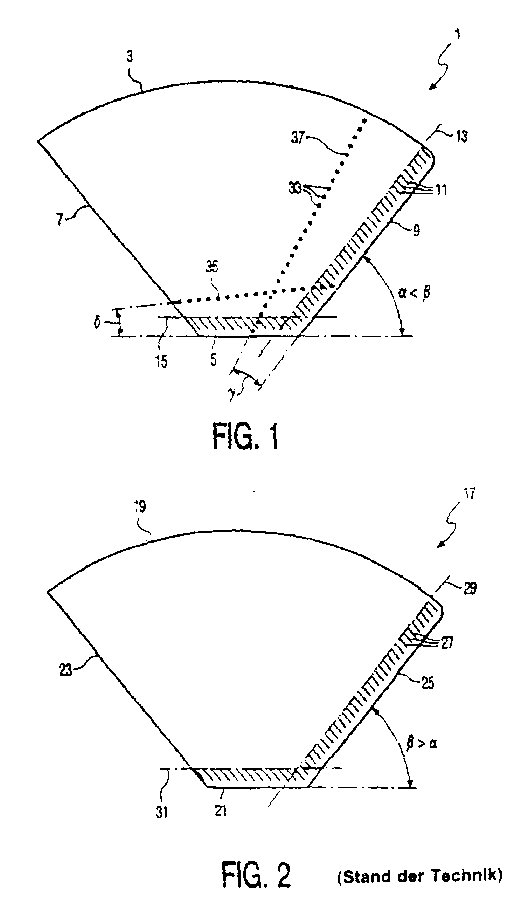

Die Filtertüte gemäß Figur 1 besteht aus einem zusammengefalteten Stück Filterpapier, und wird im platten Zustand gezeigt, wie sie normalerweise vom Fabrikanten geliefert wird und wobei also zwei Lagen Filterpapier aufeinander liegen. Die Filtertüte hat annähernd die Form eines gleichschenkligen Trapezes mit einer bogenförmigen Basis 3, wo die zwei Lagen des Filtermaterials frei von einander liegen. Beim Öffnen der Filtertüte kann der Kaffee an dieser Seite in die Filtertüte eingebracht werden. Gegenüber der Basis 3 befindet sich ein im wesentlichen mit der Basis 3 parallel laufender und kürzerer Filterboden 5, wo die zwei Lagen Filtermaterial miteinander verbunden sind. Ferner sind zwei Seiten vorgesehen, wo die zwei Filterlagen gleichermaßen miteinander verbunden sind, nämlich eine Seite 7, die von einem Falz im Filtermaterial gebildet wird und dieser gegenüber, eine Seite 9. Der Boden 5 und die Seite 9 sind auf gebräuchliche Weise, ohne Leim oder dergleichen, fest miteinander verbunden, durch im Relief ein Muster von durchgedrückten Riffeln oder Rillen 11 anzubringen. Piltertüten die auf diese Weise zusammengefügt sind, sind in der Praxis allgemein bekannt und brauchen hier nicht weiter ausgebreitet besprochen zu werden, man sehe z.B. die eher erwähnte internationale Patentanmeldung WO 96/32043.

In der Figur 1 sind innerhalb des Rillenmusters 11 an der Seite 9 und in der Nähe des Bodens 5, Streifenlinien 13 beziehungsweise 15 angegeben. Wenn die Filtertüte gemäß Figur 1 in einem Filtereinsatz Nr. 4 angewendet wird, soll, gemäß Vorschrift des Filtertütenfabrikanten, die linke Seite 9 entlang Linie 13 und der Boden 5 entlang Linie 15, gefaltet werden. Es muß bemerkt werden, daß die Linien 13 und 15 nur imaginäre Linien sind, die im allgemeinen nicht sichtbar auf der Filtertüte angebracht werden, sondern die einfach die innere Begrenzung des Rillenmusters 11 bilden. Bei Filtertüten die aus WO 96/32043 bekannt sind, können Linien vorgesehen sein die von Perforationslöchern gebildet werden. Die Perforation ist natürlich nicht vorgesehen um den Rand 9 beziehungsweise den Boden 5 abzutrennen, sondern um das Falten zu vereinfachen.

Nach vorhergehender Besprechung von Figur 1, wird Figur 2 nur sehr flüchtig besprochen. Wie sichon gesagt wird eine Filtertüte der kleineren Sorte Nr. 2 gezeigt, mit dem Verweiszeichen 17, die für einen kleineren Filtereinsatz Nr. 2 bestimmt ist. Die Filtertüte hat eine Basis 19, einen Filterboden 21, eine gefaltete Seite 23 und eine gegenüberliegende Seite 25. Das Rillenmuster 27 wird an der Innenseite von den imaginären Linien 29 und 31 begrenzt. Erst wenn der Boden 21 und die Seite 25 den imaginären Linien 31 beziehungsweise 29 entlang umgefaltet sind, hat die Filtertüte genau die äußere Form die zur Anwendung im Filtereinsatz Nr. 2 geeignet ist. Diese Form wird also vom größten Teil des Oberrands 19, vom größtem Teil des linken Seitenrands 23, von der imaginären Linie 31 und von der imaginären Linie 29 begrenzt.

In Figur 1 wird zwischen dem Oberrand 3, der linken Seite 7, sowie den zwei unterbrochenen, durch Farbstoff angegebenen mit Punkten 33 markierten Linien 35 und 37, eine Oberfläche umgrenzt die gleich der Form ist die vom Oberrand 19, der Seite 23 und von den beiden Linien 29 und 31 in Figur 2, umgrenzt wird. Die Linien 35 und 37 bilden die Anpassungsmittel in Form von Falzlinien beim Boden 5 und bei der Seite 9, um die Stellen anzugeben wo ein Gebraucher Fälze anbringen soll, um die Abmessungen der Filtertüte 1 dadurch anzupassen, daß die Teile außerhalb der Linien 33 und 35 umgefaltet werden. Die Punktlinien 35 und 37 könnten während der Fertigung der Filtertüten z.B. mittels einer Tintenstrahlvorrichtung angebracht werden.

Nach dem Falten entsteht eine Filtertüte der gewünschten kleineren Abmessung mit einem Oberrand 3, einem Seitenrand 7, einem Boden 35 und einer Seite 37. Dadurch, daß man den Oberrand 3 und den Seitenrand 7 der also durch Falten erhaltenen kleineren Filtertüte mit dem Oberrand 3 und dem Seitenrand 7 der größeren Piltertüte zusammenfallen läßt, benötigt man nur zwei Falzlinien 35 und 37 und werden dementsprechend auch nur zwei Falthandlungen erfordert.

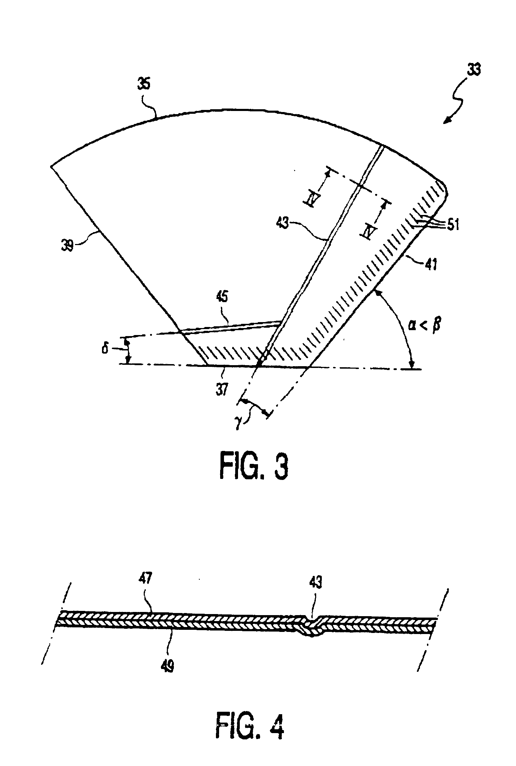

Figur 3 zeigt ein erfindungsgemäßes Ausführungsbeispiel einer Filtertüte 33 mit einem Oberrand 35, einem gegenüberliegenden Boden 37, einem gefalteten Seitenrand 39 sowie diesem gegenüberliegend, einen Seitenrand 41. Die Falzlinien 43 und 45 werden in diesem Fall von im Filtermaterial der Filtertüte angebrachte Relieflinien gebildet. Figur 4 zeigt einen vergrößerten Querschnitt durch die Filtertüte 33 gemäß den Pfeilen IV-IV in Figur 3. Die beiden aufeinander liegenden Lagen 47 und 49 der Filtertüte 33 sind an der Falzlinie 43 von im Querschnitt ungefähr halbkreisförmigen Reliefprägungen versehen. Derartige Prägungen können, ebenso wie das Rillenmuster 51 an der Filtertüte 33, während der Herstellung der Filtertüten mit demselben Gerät angebracht werden. Dabei werden die Relieflinien so verwirklicht, daß das Filtermaterial der Lagen 47 und 49 nicht dermaßen verformt wird, daß diese an der Relieflinie 43 und 45 fest miteinander verbunden werden. Das hätte nämlich nachteilige Folgen für die Brauchbarkeit der Filtertüte 33 bei Anwendung in Nr. 4 Filtereinsätzen.

In Figur 3 ist zu sehen, daß die Falzlinie 43 von Rand 35 bis Rand 37 der Filtertüte durchläuft. Die Falzlinie 45 läuft von Seite 39, allerdings nicht bis zur gegenüberliegenden Seite 41, sondern nur bis an die Falzlinie 43. Auch bei einem solchen Falzlinienschema ist einfaches Falten möglich dadurch, daß man erst der Falzlinie 43 entlang faltet und dann der Falzlinie 45 entlang. Alternative sind, daß nur die Falzlinie 45 von der einen Seite zur anderen Seite läuft, oder daß keine der beiden Falzlinien 43 und 45 von der einen zur gegenüberliegenden Seite durch läuft.

Durch die eigene Weise in der die Falzlinien vorgesehen sind, machen die Falzlinien 37 und 43 einen spitzen Winkel γ mit der angrenzenden Seite 9, beziehungsweise 41. So wird mit der Tatsache gerechnet, daß bei einer Filtertüte Nr. 4, wie bei den Figuren 1 und 3, der Winkel α zwischen dem Boden und den Seiten 7 und 9 kleiner ist als der Winkel β zwischen dem Boden 21 und den Seiten 23 und 25 bei einer Filtertüte Nr 2, wie die Filtertüte 17 die in Figur 2 gezeigt wird.

Obwohl die Erfindung im Obigen unter Bezugnahme auf lediglich zwei Ausführungsbeispiele beschrieben worden ist, ist die Erfindung keineswegs darauf beschränkt, sondern umfaßt jede mögliche, durch die beigefügten Ansprüche umrissene Ausführungsweise. So können mehr als zwei Falzlinien angewendet werden, z.B. indem man die Falzlinie beim Boden der Filtertüte parallel mit dem Boden laufen läßt und man bei beiden Seiten der Filtertüte eine Falzlinie anbringt. Bei einer andern, nicht dargestellten Ausführungsweise, kann anstatt einer aus Punkten gebildeten Falzlinie 35 und 37, eine durchgezogene Linie vorgesehen sein. Eventuell könnte eine Relieflinie mit einer farbigen Linie zusammenfallen um die Anwesenheit und die Stelle der Relieflinie besser anzudeuten.

## Patentansprüche

1. Eine Filtertüte (1,33) für Aufgußgetränke, im besonderen eine Kaffeefiltertüte, mit einem zusammengefaltenen Stück faseriges Filtermaterial, im besonderen Filterpapier, welche Filtertüte im platten Zustand mit zwei Lagen aufeinander geliefert wird und im platten Zustand annähernd die Form eines gleichschenkligen Trapezes hat mit einer Basis (3,35) wo die zwei Lagen des Filtermaterials frei von einander liegen, ein gegenüberliegender im wesentlichen parallel laufender und kürzerer Filterboden (5,37) wo die zwei Lagen Filtermaterial miteinander verbunden sind, sowie zwei Seiten (7,9;39,41), wovon eine (7;39) von einem Falz im Filtermaterial gebildet wird und bei der anderen (9;41) die zwei Lagen Filtermaterial miteinander verbunden sind, wobei die Abmessungen der Filtertüte auf Anwendung in einem Filtereinsatz der ersten Standardgröße abgestimmt sind, und die Filtertüte mit Anpassungsmitteln versehen ist um die Abmessungen der Filtertüte zur Anwendung in einem Filtereinsatz der zweiten kleineren Standardgröße anzupassen,
**dadurch gekennzeichnet, daß** die Anpassungsmittel aus Falzlinien (35,37;43,45) in der Nähe des Bodens (5,37) und/oder wenigstens einer der Seiten (9;41) bestehen, zur Andeutung der Stellen wo die Fälze zur Verkleinerung der Abmessungen der Filtertüte (1;33) durch Umfalten entsprechender ihrer Teile angebracht werden und
- daß mindestens eine der Falzlinien (35,37;43,45) einen spitzen Winkel (γ;δ) mit dem angrenzenden Rand (5,9;37,41) der Filtertüte macht.

2. Eine Filtertüte (1,33) gemäß Anspruch 1,
**dadurch gekennzeichnet, daß** nur zwei Falzlinien (33,35;43,45) vorgesehen sind, und zwar beim Boden (5;37) und bei einer der Seiten (9;41) der Filtertüte.

3. Eine Filtertüte (1) gemäß Anspruch 1 oder 2,
**dadurch gekennzeichnet, daß** die Falzlinien (35,37) sich aus einem zweckmäßigen, für den Konsumenten unschädlichen, Farbstoff konstituieren.

4. Eine Filtertüte (1) gemäß Anspruch 3,
**dadurch gekennzeichnet, daß** die Falzlinien (33,35) unterbrochen sind.

5. Eine Filtertüte (33) gemäß Anspruch 1,
**dadurch gekennzeichnet, daß** die Falzlinien (43,45) von Relieflinien im Filtermaterial gebildet werden.

6. Eine Filtertüte (1;33) gemäß einem der vorhergehenden Ansprüche,
**dadurch gekennzeichnet, daß** mindestens eine der Falzlinien (35,37;43) vom einen bis zum anderen ihm gegenüberliegenden Rand (7,9,3,5;35,37) der Filtertüte läuft.

## Claims

1. A filter bag (1, 33) for infusion beverages, in particular a coffee filter bag, with a folded piece of fibrous filter material, in particular filter paper, which filter bag is supplied in the flat condition with two plies superimposed, and in the flat condition has approximately the shape of an equilateral trapezium with a base (3, 35) in which the two plies of filter material are parted, an opposite, essentially parallel, and shorter, filter bottom (5, 37) in which the two plies of filter material are joined together, and two sides (7, 9; 39, 41) one (7; 39) of which is formed by a fold in the filter material and at the other (9; 41) of which the two plies of filter material are joined together, wherein the dimensions of the filter bag are adapted for use in a filter element of the first standard size and the filter bag is provided with adaptation means to adapt the dimensions of the filter bag for use in a filter element of the second, smaller standard size,
**characterized in that** the adaptation means consist of fold lines (35, 37; 43, 45) in the neighbourhood of the bottom (5, 37) and/or of at least one of the sides (9; 41), to indicate the places where folds to reduce the the dimensions of the filter bag (1; 33) are made by folding over corresponding parts thereof and
**in that** at least one of the fold lines (35, 37; 43, 45) makes an acute angle (γ; δ) with the adjacent edge (5, 9; 37, 41) of the filter bag.

2. A filter bag (1, 33) according to Claim 1,
**characterized in that** only two fold lines (33, 35; 43, 45) are provided, *viz.* near the bottom (5; 37) and near one of the sides (9; 41) of the filter bag.

3. A filter bag (1) according to Claim 1 or Claim 2,
**characterized in that** the fold lines (35, 37) are constituted of a convenient dye that is harmless to the consumer.

4. A filter bag (1) according to Claim 3,
**characterized in that** the fold lines (33, 35) are discontinuous.

5. A filter bag (33) according to Claim 1,
**characterized in that** the fold lines (43, 45) are formed from relief lines in the filter material.

6. A filter bag (1; 33) according to any one of the preceding claims,
**characterized in that** at least one of the fold lines (35, 37; 43) runs from one edge of the filter bag to the other opposite edge (7, 9, 3, 5; 35, 37).

## Revendications

1. Filtre (1, 33) pour des boissons à verser, en particulier un filtre à café, avec un élément replié sur lui-même en matériau filtrant fibreux, en particulier en papier filtrant, lequel filtre quand il est à plat est fourni ayant deux couches l'une sur l'autre, et présente quand il est à plat à peu près la forme d'un trapèze isocèle avec une base (3, 35) où les deux couches du matériau filtrant se situent libres l'une de l'autre, un fond du filtre (5, 37) opposé plue court et s'étirant essentiellement parallèlement où les deux couches du matériau filtrant sont reliées l'une avec l'autre, ainsi que deux côtés (7, 9 ; 39, 41) dont l'un (7 ; 39) est formé par une pliure dans le matériau filtrant et les deux couches de matériau filtrant sont reliées à l'autre (9 ; 41), les dimensions du filtre étant adaptées à l'utilisation dans un élément pour filtre de première taille standard, et le filtre étant muni de moyens d'ajustement pour ajustage de ses dimensions dans le but de l'utiliser dans un élément pour filtre de deuxième taille standard,
**caractérisé en ce que** les moyens d'ajustement sont constitués de lignes de pliure (35, 37 ; 43, 45) à proximité du fond (5, 37) et/ou au moins d'un des côtés (9 ; 41), pour indiquer les endroits où les pliures sont appliquées pour la réduction des dimensions du filtre (1 ; 33) par pliage de ses parties correspondantes et
- **en ce qu'**au moins une des lignes de pliure (35, 37 ; 43, 45) fait un angle aigu (γ ; δ) avec le bord contigu (5, 9 ; 37, 41) du filtre.

2. Filtre (1, 33) selon la revendication 1,
**caractérisé en ce que** seulement deux lignes de pliure (33, 35 ; 43, 45) sont prévues, à savoir vers le fond (5 ; 37) et sur l'un des côtés (9 ; 41) du filtre.

3. Filtre (1) selon la revendication 1 ou 2,
**caractérisé en ce que** les lignes de pliure (35, 37) sont constituées d'un colorant approprié à son but et inoffensif pour le consommateur.

4. Filtre (1) selon la revendication 3,
**caractérisé en ce que** les lignes de pliure (33, 35) sont discontinues.

5. Filtre (33) selon la revendication 1,
**caractérisé en ce que** les lignes de pliure (43, 45) sont formées par des lignes en relief dans le matériau filtrant.

6. Filtre (1 ; 33) selon l'une quelconque des revendications précédentes,
**caractérisé en ce qu'**au moins une des lignes de pliure (35, 37 ; 43) s'étend d'un bord du filtre vers l'autre opposé (7, 9, 3, 5 ; 35, 37).
